(19) Europäisches Patentamt

European Patent Office

Office européen des brevets

(11) **EP 1 603 351 B1**

(12) **FASCICULE DE BREVET EUROPEEN**

(45) Date de publication et mention
de la délivrance du brevet:
**31.10.2007 Bulletin 2007/44**

(51) Int Cl.:
***H04Q 7/30*** *(2006.01)*

(21) Numéro de dépôt: **05104318.0**

(22) Date de dépôt: **20.05.2005**

(54) **Dispositif de routage local de trafics locaux au sein d'un reseau de communication radio**

System zur örtlichen Leitweglenkung von lokalem Verkehr in einem Funkkommunikationsnetz

System for locally routing local traffic in a radio communication system

(84) Etats contractants désignés:
**AT BE BG CH CY CZ DE DK EE ES FI FR GB GR
HU IE IS IT LI LT LU MC NL PL PT RO SE SI SK TR**

(30) Priorité: **24.05.2004 FR 0451012**

(43) Date de publication de la demande:
**07.12.2005 Bulletin 2005/49**

(73) Titulaire: **Alcatel Lucent
75008 Paris (FR)**

(72) Inventeurs:
• **Farineau, Jean
92300, Levallois Perret (FR)**
• **Aime, Christelle
78170 La celle Saint Cloud (FR)**
• **Lignon, Jean-Noël
31270, Frouzins (FR)**

(74) Mandataire: **Hedarchet, Stéphane
Alcatel Lucent
Intellectual Property & Standards
54 rue La Boétie
75008 Paris (FR)**

(56) Documents cités:
**WO-A-96/35311          US-A- 5 537 610
US-B1- 6 597 912**

EP 1 603 351 B1

**Description**

L'invention concerne le domaine des réseaux de communication radio par voie satellite ou terrestre, et plus particulièrement le routage du trafic entre terminaux de communication rattachés à de tels réseaux.

On entend ici par « réseau de communication radio par voie satellite ou terrestre » un réseau de communication, tel qu'un réseau GSM/GPRS ou UMTS, dans lequel les trafics échangés par des terminaux de communication doivent être transmis à un commutateur d'appels (ou MSC pour « Mobile-services Switching Centre »), chargé de gérer des communications établies dans un secteur géographique donné, via un satellite de communications ou un réseau terrestre, couplé à deux équipements de transmission, eux-mêmes raccordés chacun à un routeur de trafic. Les deux routeurs de trafic et les deux équipements de transmission peuvent être installés soit au niveau de l'interface dite « A-bis » du réseau, c'est-à-dire entre certaines de ses stations de base et son contrôleur de stations de base associé, soit sur l'interface dite « A-ter », c'est-à-dire entre son contrôleur de stations de base et un transcodeur couplé au commutateur d'appels associé et chargé de convertir la voix compressée en paroles numérisées à 64 kbps (kilo bits par seconde), soit encore sur l'interface dite « A », c'est-à-dire entre ledit transcodeur et ledit commutateur d'appels.

Dans le cas, par exemple, de réseaux de transmission par satellite, comme le sait l'homme de l'art, les déports satellitaires constituent une solution particulièrement attractive pour leurs opérateurs lorsqu'ils souhaitent les déployer rapidement sur des sites très étalés sur le plan géographique et/ou dispersés sur de grands territoires, sans que cela nécessite une infrastructure terrestre lourde et onéreuse.

Hélas, le coût d'exploitation d'un réseau à déport satellitaire est, en l'état de la technique connue, quasi rédhibitoire du fait du coût de la location de ressources satellitaires.

Pour tenter de remédier à cet inconvénient, au moins deux solutions ont été proposées. Une première solution consiste à utiliser des commutateurs d'appels (MSC) déportés en aval des équipements de transmission, ce qui revient à implanter un MSC au niveau de chaque site distant. Mais, cette solution étant très onéreuse, notamment du fait qu'elle impose de traiter des couches de protocole complexes sur un grand nombre de canaux, elle s'avère rédhibitoire en dehors des situations dans lesquelles les couvertures des sites distants, objets des déports de commutateurs d'appels, concernent un très grand nombre d'abonnés au réseau, typiquement au moins 400000.

Une seconde solution consiste à constituer des configurations locales spécifiques intégrant tous les éléments du réseau pour une capacité réduite. Mais, cette solution nécessite des développements spécifiques très onéreux, et donc non rentables. En outre cette solution s'avère incompatible avec les réseaux existants du fait qu'ils utilisent généralement des solutions propriétaires requérant des processus d'intégration complexes.

Le document WO963511 décrit un procédé d'établissement d'appel entre des terminaux appelait et appelé qui prend en considération des paramètres comme la topologie du réseau, la disponibilité des ressources, les caractéristiques des terminaux et le type d'appel pour déterminer l'acheminement end-to-end le plus court entre les terminaux appelant et appelé.

Aucune solution connue n'étant entièrement satisfaisante, l'invention a donc pour but d'améliorer la situation.

Elle propose à cet effet un dispositif dédié au routage local de trafics locaux entre des terminaux de communication, éventuellement mobiles, pour un routeur de trafic raccordé à une portion de réseau de transmission d'un réseau de communication radio.

Il est rappelé qu'au cours de la procédure d'établissement d'un appel local, d'un terminal A, l'appelant, vers un terminal B, l'appelé, quatre canaux de trafic sont établis : un premier canal montant du terminal A vers le commutateur d'appels, un canal descendant associé à ce premier canal, un second canal montant du terminal B vers le commutateur d'appels, et un canal descendant associé à ce second canal. Chronologiquement, le premier canal de trafic établi concerne le canal montant de l'appelant et, simultanément, le canal descendant associé ; les canaux montant et descendant concernant l'appelé sont généralement établis plus tard, au cours de la procédure d'établissement d'appel. La procédure d'établissement d'appel prend fin lorsque l'appelé a décroché ; le trafic véhiculé par le premier canal montant se retrouve alors de manière quasi identique sur le second canal descendant, et réciproquement pour le trafic véhiculé par le second canal montant. Il n'y a cependant pas d'identité absolue entre les données constituant le trafic montant et les données du trafic descendant opposé, car le trafic est traité entre temps par le transcodeur TC (qui assure la conversion du format GSM au format ADPCM 64 kbps avant routage par le commutateur d'appel, puis réencodage au format GSM) ; les opérations de corrélation définies ci-après tiennent compte de cette non-identité absolue.

Le dispositif de routage local se caractérise par le fait qu'il comprend des moyens de traitement chargés, une fois qu'ont été établis des premier et second canaux de trafic montants entre des terminaux appelant et appelé et le commutateur d'appels du réseau et des premier et second canaux de trafic descendants entre ce commutateur d'appels et les terminaux appelant et appelé :

- de comparer entre elles des données choisies véhiculées dans le premier canal de trafic montant et dans au moins un canal de trafic descendant établi après le premier canal de trafic montant et dans une fenêtre temporelle choisie, puis

- lorsque la comparaison indique une corrélation entre les données véhiculées, d'ordonner au routeur de trafic de router localement et directement le trafic du premier canal montant vers le second canal descendant et du second canal montant vers le premier canal descendant, en cessant dès lors l'acheminement du trafic dans les deux sens (montant et descendant) via la portion de réseau de transmission et le commutateur d'appels.

Le dispositif de routage local selon l'invention peut comporter d'autres caractéristiques qui pourront être prises séparément ou en combinaison, et notamment :

- ses moyens de traitement peuvent être chargés de comparer entre elles des données choisies véhiculées dans le premier canal de trafic montant et dans chaque canal de trafic descendant établi après le premier canal de trafic montant et dans la fenêtre temporelle choisie,
- ses moyens de traitement peuvent être chargés de copier les données à comparer (qui sont véhiculées par le premier canal montant), puis d'appliquer aux données copiées un décalage temporel choisi en fonction du temps aller/retour pour parvenir au niveau du commutateur d'appels et revenir, et de comparer les données copiées et décalées temporellement aux données véhiculées par chaque canal descendant établi après le premier canal de trafic montant et dans la fenêtre temporelle choisie,
- ses moyens de traitement peuvent être chargés de sélectionner parmi les canaux descendants établis dans la fenêtre temporelle choisie le canal dont les données choisies répondent à un ou plusieurs critères d'identité avec celles véhiculées par le premier canal de trafic montant ; le canal qui est ainsi sélectionné est par la suite identifié en tant que second canal,
- ses moyens de traitement peuvent être également chargés de comparer entre elles les données choisies qui sont véhiculées par le second canal montant avec les données du premier canal descendant,
- ses moyens de traitement peuvent être également chargés, en cas de comparaison indiquant une corrélation entre les données véhiculées, d'ordonner au routeur de trafic de router localement et directement le trafic du premier canal montant vers le second canal descendant et du second canal montant vers le premier canal descendant, sans transmission du trafic au commutateur d'appels,
- les données comparées peuvent être des données de signalisation et/ou des données de trafic,
- en cas de données de signalisation, celles-ci peuvent être au moins représentatives de l'identifiant de communication du terminal appelé. Dans ce cas les moyens de traitement sont agencés de manière à considérer les données comme corrélées lorsqu'elles représentent l'identifiant de communication du terminal appelé. Les données de signalisation peuvent être également représentatives de l'identifiant de communication du terminal appelant. Dans ce cas les moyens de traitement sont agencés de manière à considérer les données comme corrélées lorsqu'elles représentent également l'identifiant de communication du terminal appelant. Mais, les données de signalisation peuvent être, à la place ou en combinaison, représentatives d'un identifiant de trafic associé à un identifiant de canal. Dans ce cas les moyens de traitement sont agencés de manière à considérer les données comme corrélées lorsqu'elles représentent l'identifiant de trafic et l'identifiant de canal associé,
- en cas de données de trafic, celles-ci peuvent être des signaux binaires caractérisant la présence de paroles ou d'un silence. Dans ce cas les moyens de traitement sont agencés de manière à considérer les données comme corrélées lorsqu'elles représentent des signaux binaires identiques,
- ses moyens de traitement peuvent assurer une fonction de compression permettant de minimiser la capacité nécessaire à la transmission du trafic sur le réseau de transmission. Dans ce cas, on prévoit une fonction de décompression de l'autre côté de la portion de réseau de transmission (côté site central), pour restituer le trafic initial, tel qu'il était avant compression, et on prévoit des fonctions identiques dans le sens descendant (compression du côté site central, et décompression du côté du dispositif de routage local (ou site distant)),
- dans une première variante, les données de trafic prises en compte dans le processus de corrélation peuvent être des données de voix décompressées. Dans une seconde variante, les données de trafic peuvent être des valeurs d'au moins un paramètre critique représentatif des données de voix compressées. Dans une troisième variante, les données de trafic peuvent être une combinaison linéaire ou non linéaire de paramètres critiques représentatifs des données de voix compressées. Dans ces trois variantes, les moyens de traitement sont préférentiellement agencés de manière à déterminer la valeur de covariance entre les données véhiculées, puis à retenir les canaux dont la valeur de covariance avec le premier canal excède un seuil déterminé, et à considérer comme corrélé le canal qui présente la valeur de covariance la plus élevée,
- ses moyens de traitement peuvent être chargés, lorsqu'ils reçoivent une instruction signalant l'établissement de troisième canaux montant et descendant entre un troisième terminal de communication (appelant ou appelé) et le commutateur d'appels, en vue d'une liaison en mode « conférence » avec les terminaux appelant et appelé, d'ordonner au routeur d'interrompre le routage de trafic local et direct afin de reprendre un routage classique via le commutateur d'appels,
- ses moyens de traitement peuvent être chargés, en cas de demande d'écoute sur les premier et second canaux montants, d'ordonner au routeur de trafic de dupliquer le trafic véhiculé par les premier et second canaux montants afin, d'une part, de le router localement et directement, et d'autre part, de le transmettre, via la portion de réseau de transmission, au commutateur d'appels,

- ses moyens de traitement peuvent être chargés, une fois le routage local et direct établi, d'ordonner au routeur de trafic de transmettre en direction de l'autre routeur de trafic auquel il est couplé via la portion de réseau de transmission, des indicateurs binaires signalant que la liaison entre les terminaux appelant et appelé est en cours. En variante, ses moyens de traitement peuvent être chargés, une fois que le routage local et direct a été établi, d'ordonner au routeur de trafic de transmettre, sous une forme compressée, en direction de l'autre routeur de trafic, via la portion de réseau de transmission, des bits de contrôle associés à des mots d'alignement temporel, correspondant à des trames de repos ou des trames non valides, pendant la durée de la communication entre les terminaux appelant et appelé, afin de reconstituer côté routeur opposé un flux de trafic continu, jusqu'à la fin de la communication, flux destiné à maintenir le fonctionnement normal du réseau, qui teste généralement à chaque extrémité de la liaison déportée la présence du flux de trafic pour le canal établi, et ce jusqu'à la procédure de fin d'appel,

- ses moyens de traitement peuvent être chargés, une fois que le routage local et direct a été établi, d'ordonner au routeur de trafic de réduire, de préférence de façon progressive vers une valeur choisie, par exemple égale à zéro, un délai de transmission différée des trames du trafic à router localement et directement, initialement représentatif du temps aller/retour pour parvenir au niveau du commutateur d'appels et revenir.

L'invention propose également un routeur de trafic, pour un réseau de communication radio comprenant une portion de réseau de transmission et un commutateur d'appels, équipé d'un dispositif de routage local du type de celui présenté ci-avant.

L'invention est particulièrement bien adaptée, bien que de façon non exclusive, aux réseaux de communication mobiles, comme par exemple les réseaux cellulaires de type TDMA ou CDMA, et en particulier les réseaux GSM, GPRS, EDGE et UMTS. L'invention est également adaptée aux réseaux de communication par satellite, exploitant des satellites de type GEO, MEO ou LEO. L'invention est également adaptée aux réseaux de communication terrestres, exploitant par exemple des liaisons câblées, à fibres optiques, ou par voie hertzienne.

L'invention est particulièrement avantageuse, bien que de façon non exclusive, dans les réseaux utilisant un ou plusieurs déports par satellite sur une partie de leurs liaisons. Par ailleurs, l'invention s'applique à tout type de flux transmis : voix, données, vidéo, télécopie (ou fax), radar, que ces flux soient transmis de manière brute ou compressée.

D'autres caractéristiques et avantages de l'invention apparaîtront à l'examen de la description détaillée ci-après, et des dessins annexés, sur lesquels :

- la figure 1 illustre de façon schématique un exemple de réseau de communication radio à déport satellitaire équipé d'un dispositif selon l'invention,
- la figure 2 illustre de façon schématique et fonctionnelle un exemple de routeur de trafic équipé d'un dispositif selon l'invention,
- la figure 3 illustre de façon schématique un exemple de localisation de ports et de trajet de canaux TCH avant l'activation d'un routage local selon l'invention,
- la figure 4 illustre de façon schématique un exemple de corrélation de canaux selon l'invention,
- la figure 5 illustre de façon schématique un exemple de routage transparent avant l'activation d'un routage local selon l'invention,
- la figure 6 illustre de façon schématique un premier exemple de translation de canaux par brassage au niveau d'un commutateur d'appels central MSC,
- la figure 7 illustre de façon schématique un second exemple de translation de canaux par brassage au niveau d'un commutateur d'appels central MSC,
- la figure 8 illustre de façon schématique un exemple de routage local, selon l'invention, au sein du réseau de la figure 1,
- la figure 9 illustre de façon schématique un exemple de détection de mode de conférence au sein du réseau de la figure 1, en présence d'une activation de routage local selon l'invention,
- la figure 10 illustre de façon schématique un exemple de routage local selon l'invention au sein du réseau de la figure 1, destiné à satisfaire à des contraintes d'écoute, et
- la figure 11 illustre de façon schématique un exemple de trame de type TRAU.

Les dessins annexés pourront non seulement servir à compléter l'invention, mais aussi contribuer à sa définition, le cas échéant.

L'invention a pour objet de permettre le routage local de trafics locaux au sein d'un réseau de communication radio utilisant au moins une portion de réseau de transmission par voie terrestre ou satellitaire.

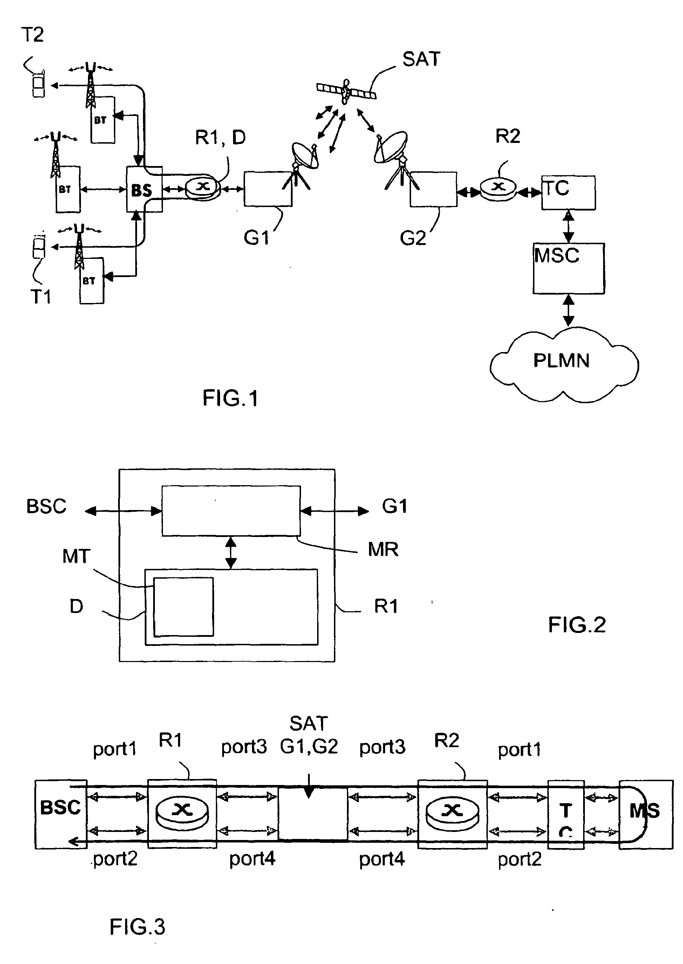

On se réfère tout d'abord aux figures 1 et 2 pour décrire un exemple d'application de l'invention à un réseau de communication radio à déport satellitaire. Il est important de noter qu'un tel réseau peut comporter un ou plusieurs dispositifs de routage local D selon l'invention.

Dans ce qui suit, on considère que le réseau radio est de type GSM/GPRS. Mais, l'invention n'est pas limitée à ce type de réseau. Elle concerne tous les réseaux radio terrestres, et notamment ceux de type EDGE ou UMTS, et d'une manière générale les réseaux de communication radio terrestres tels que ceux de type TDMA ou CDMA. Elle concerne également les réseaux de communication par satellite.

Par ailleurs, dans ce qui suit on entend par « terminal de communication mobile » tout équipement de communication mobile capable d'échanger des données sous la forme de signaux radio avec une station de base BTS. Il pourra donc s'agir, par exemple, d'équipements d'utilisateurs, tels que des téléphones mobiles (ou cellulaires) ou des ordinateurs portables ou des assistants personnels numériques (ou PDA) munis d'un équipement de communication radio. Mais, l'invention concerne également les communications entre terminaux (ou stations) fixes communiquant via des réseaux de communication mobile. La notion de mobilité est ici nullement limitative, elle est seulement destinée à illustrer un exemple d'application de l'invention à un réseau radio de type cellulaire.

On considère dans ce qui suit que les terminaux de communication mobiles sont des téléphones mobiles Ti.

Comme cela illustré sur la figure 1, un réseau GSM/GPRS à déport satellitaire comprend schématiquement, mais de façon suffisante à la compréhension de l'invention :

- des stations de base BTS (pour « Base Transceiver Station ») comportant des équipements radio réalisant la liaison avec des terminaux de communication mobiles,
- un ou plusieurs contrôleurs de stations de base BSC (pour « Base Station Controller ») auxquels sont raccordés une ou plusieurs stations de base BTS et chargés d'assurer la gestion des ressources radio,
- au moins un lien satellite comportant un satellite de communications SAT, et des premier G1 et second G2 équipements de communications satellitaires, se présentant généralement sous la forme d'une passerelle (ou « gateway ») et chargés de transmettre du trafic et de la signalisation via le satellite SAT,
- au moins un commutateur d'appels central MSC (pour « Mobile-services Switching Centre ») chargé de gérer les communications établies dans le secteur géographique couvert par les stations de base BTS couplées au(x) contrôleurs de stations de base BSC au(x)quel(s) il est couplé, via le satellite SAT, et raccordé au coeur du réseau (ici de type PLMN, pour « Public Land Mobile Network ») ainsi que de préférence (et comme illustré) à un transcodeur TC chargé de convertir la voix compressée en paroles numérisées à 64 kbps (kilo bits par seconde) et réciproquement,
- des premier R1 et second R2 routeurs de trafic respectivement couplés aux premier G1 et second G2 équipements de communications satellitaires et chargés de router les trafics qu'ils reçoivent en fonction de leur(s) destination(s). Dans l'exemple illustré, le lien satellite est implanté au niveau de l'interface A-ter du réseau, c'est-à-dire entre le contrôleur de stations de base BSC et le transcodeur TC. Par conséquent, le premier routeur de trafic R1 est raccordé au contrôleur de stations de base BSC. Mais, le lien satellite peut être implanté au niveau de l'interface A-bis du réseau, c'est-à-dire entre les stations de base BTS et le contrôleur de stations de base BSC associé, ou bien sur l'interface A, c'est-à-dire entre le transcodeur TC et le commutateur d'appels central MSC. Ces interfaces sont définies par les normes G.703 pour ce qui concerne la couche physique et G.704 pour ce qui concerne le tramage (généralement à 2048 kbps).

Dans un tel réseau, les données sont échangées sur l'interface A-bis au moyen de canaux de signalisation multiples (au moins un canal par station de base BTS), occupant chacun soit un octet (dans le cas de canaux à 64 kbps), soit deux bits par trame (dans le cas de canaux à 16 kbps).

Lorsque les données échangées sont des données de trafic, les canaux utilisés sont des canaux de trafic TCH (pour « Traffic Channels »). Chaque canal TCH occupe alors soit deux bits par trame (dans le cas d'un canal de type « Full Rate » (ou FR) à 16 kbps), soit un bit (dans le cas d'un canal de type « Half Rate » (ou HR) à 8 kbps). Dans le cas d'une communication vocale on utilise un canal TCH dans chaque sens, de taille et de position identiques au sein de chaque trame dite E1 entrante ou sortante sur un port physique donné.

On peut noter qu'un schéma similaire s'applique pour les canaux de trafic à l'interface A-ter. Les canaux de signalisation sont cependant moins nombreux du fait que le volume de signalisation échangé au niveau de l'interface A-ter est beaucoup plus faible qu'à l'interface A-bis.

Dans un réseau à déport satellitaire de type classique, c'est-à-dire dans lequel l'invention n'est pas mise en oeuvre, l'établissement d'une communication (ou d'un appel) entre un premier téléphone mobile T1, dit appelant, et un second téléphone mobile T2, dit appelé, requiert une succession d'étapes dont les principales sont rappelées ci-après.

L'utilisateur du premier téléphone mobile T1 compose le numéro du second téléphone mobile T2. Un échange de messages de signalisation se fait alors entre le premier téléphone mobile T1 et le commutateur d'appels central MSC afin de caractériser l'appel, et notamment le numéro de l'appelé T2. Le commutateur d'appels central MSC utilise ensuite sa base de données d'abonnés afin de déterminer la localisation de l'appelé T2. On considère ici, comme illustré, que l'appelé T2 est un abonné du réseau situé dans le secteur géographique géré par le commutateur d'appels central MSC.

Un échange de messages de signalisation se fait alors entre le commutateur d'appels central MSC et le second téléphone mobile T2 afin de déclencher la sonnerie de ce dernier. On établit un premier canal de trafic montant CM1 et descendant CD1 entre le premier téléphone mobile T1 et le commutateur d'appel central MSC, puis un second canal de trafic montant CM2 et descendant CD2 entre le second téléphone mobile T2 et le commutateur d'appel central MSC, ce qui constitue au total quatre circuits (deux montants et deux descendants).

Si l'utilisateur du second téléphone mobile T2 décroche, la procédure d'établissement d'appel est conclue et les quatre circuits sont utilisés pendant toute la durée de la communication afin de véhiculer la voix (ici compressée). La signalisation présente au cours de l'appel au niveau de l'interface A-bis consiste alors essentiellement en une remontée de mesures des premier T1 et second T2 téléphones mobiles vers le contrôleur BSC, utilisées notamment pour décider d'un éventuel changement de cellule en cours de communication. Dès que l'un des deux utilisateurs raccroche, les quatre circuits sont libérés.

Chacun des quatre circuits utilise une capacité de 16 kbps ou 8 kbps selon le type de codage de la voix utilisé. Par conséquent, un appel local entre deux téléphones mobiles utilise une capacité de 32 ou 64 kbps sur le lien satellite G1, SAT, G2. En présence d'un grand nombre d'appels locaux la capacité totale requise au niveau du lien satellite peut donc être très importante, rendant ainsi le déport par satellite quasi rédhibitoire en terme de coût de location.

L'invention a donc pour but de remédier à cet inconvénient en proposant un dispositif de routage local D destiné à être implanté dans chaque premier routeur R1, ou bien raccordé à ce dernier. Un tel dispositif D est illustré schématiquement, et à titre d'exemple non limitatif, sur la figure 2.

Ce dispositif est destiné à permettre le routage local du trafic local (c'est-à-dire les appels locaux), sans remontée, via le satellite SAT, vers le commutateur d'appels central MSC, de manière à limiter autant que possible les capacités satellite utilisées.

A cet effet, le dispositif D comprend un module de traitement MT chargé d'intervenir auprès du premier routeur de trafic R1 lorsque sont établis des premier CM1 et second CM2 canaux de trafic montants et des premier CD1 et second CD2 canaux de trafic descendants entre des premier T1 et second T2 téléphones mobiles et le commutateur d'appels central MSC, selon le mécanisme décrit précédemment.

Plus précisément, le module de traitement MT est couplé au module de routage MR du premier routeur R1 afin d'observer les données qui lui parviennent et de comparer entre elles certaines données choisies qui sont véhiculées dans chaque premier canal de trafic montant CM1 nouvellement établi et dans au moins un, et de préférence dans chaque, canal de trafic descendant, établi après le premier canal de trafic montant CM1 et dans une fenêtre temporelle FT choisie. Lorsque le résultat de la comparaison indique qu'il existe une corrélation entre les données véhiculées, le module de traitement MT ordonne alors au premier routeur de trafic R1, et plus précisément à son module de routage MR, de router localement et directement le trafic véhiculé par le premier canal montant CM1 vers le second canal descendant CD2 et celui véhiculé par le second canal montant CM2 vers le premier canal descendant CD1, en suspendant la transmission des trafics via le commutateur d'appels central MSC.

En d'autres termes, le module de traitement MT déclenche une analyse chaque fois qu'un canal montant CM1 est nouvellement établi, et si un canal descendant CD2 est établi consécutivement, après un laps de temps déterminé, correspondant généralement au délai minimum de transmission « bout-en-bout » du trafic, plus une marge choisie, le module de traitement MT tente de corréler certaines données véhiculées par ce canal descendant CD2 avec les données de même type véhiculées par le canal montant CM1. Cette plage temporelle qui s'étend généralement de l'instant d'établissement du canal montant CM1, plus le délai minimum de transmission « bout-en-bout », au même instant d'établissement plus le délai maximum de transmission, constitue la fenêtre temporelle FT qui sert de critère d'admission d'un canal descendant CD2 pour la prise en compte de ce canal dans le processus de corrélation avec les données choisies véhiculées par le premier canal montant CM1.

Le processus de corrélation est effectué en fenêtre glissante sur un nombre fini d'échantillons, ce nombre définissant la durée de la fenêtre de corrélation et étant choisi en fonction de la configuration du réseau et programmé dans le module de traitement MT.

Le délai de transmission introduit notamment par le déport par satellite (G1, SAT et G2) est pris en compte dans le processus de corrélation, avec une marge temporelle destinée à couvrir les cas extrêmes de délai relatif.

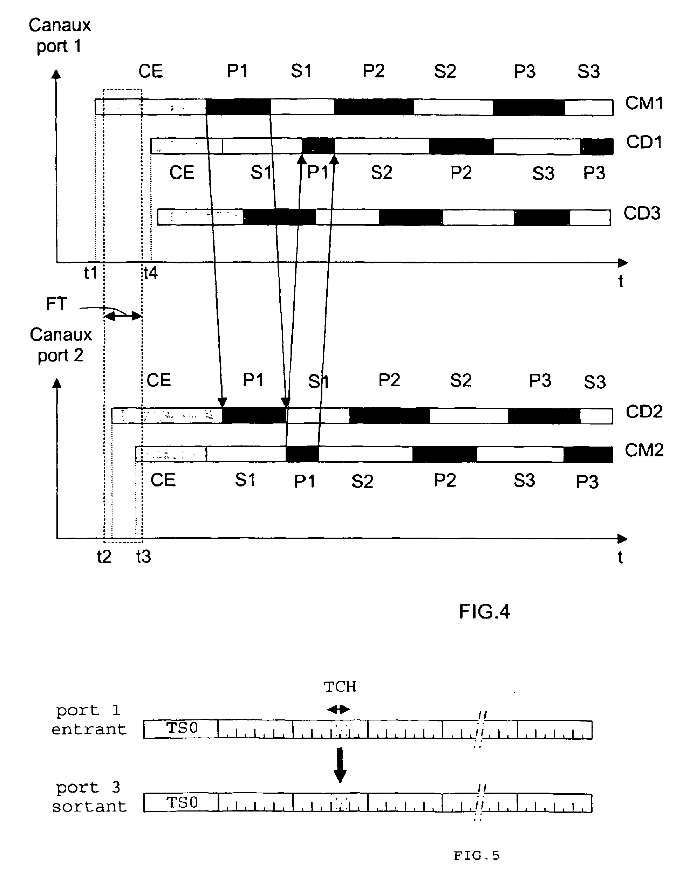

Un exemple d'établissement d'appel est décrit ci-après en référence aux figures 3 et 4. Dans cet exemple, à l'instant t1 un nouveau (premier) canal montant CM1 (de type TCH) est établi sur le port entrant n°1 du premier routeur R1 (côté BSC). Il s'agit ici d'un appel initié par le premier téléphone mobile T1. Ce premier canal montant CM1 ne porte initialement que des trames de repos (matérialisées sur la figure 4 par un rectangle gris CE), avant que ne soient présentes les trames de parole (matérialisées sur la figure 4 par des rectangles noirs P) alternées avec des trames de silence (matérialisées sur la figure 4 par des rectangles blancs S).

Ce premier canal montant CM1 est transmis par le premier routeur R1, par exemple sur son port sortant n°3, au lien satellite G1, SAT et G2, afin qu'il l'achemine au niveau du port entrant n°3 du second routeur R2, duquel il ressort par le port sortant n°1 afin d'atteindre le transcodeur TC pour y être restitué sous la forme d'un canal à 64 kbps. Il parvient alors au niveau du commutateur d'appels central MSC qui, s'apercevant qu'il est destiné à un second terminal mobile T2 rattaché au BSC d'où il provient, le route (suivant le processus de routage normal) vers le transcodeur TC. A ce stade il devient un canal de trafic descendant CD2 qui est compressé, puis transmis au second routeur R2, par exemple sur son port entrant n°2. Il ressort du second routeur R2, par exemple sur son port sortant n°4, puis parvient au niveau du lien satellite G1, SAT et G2, afin qu'il l'achemine au niveau du port entrant n°4 du premier routeur R1, duquel il ressort par le port sortant n°2 afin d'atteindre le contrôleur BSC pour qu'il le communique à la station de base BTS couvrant la cellule dans laquelle est situé le second terminal mobile T2.

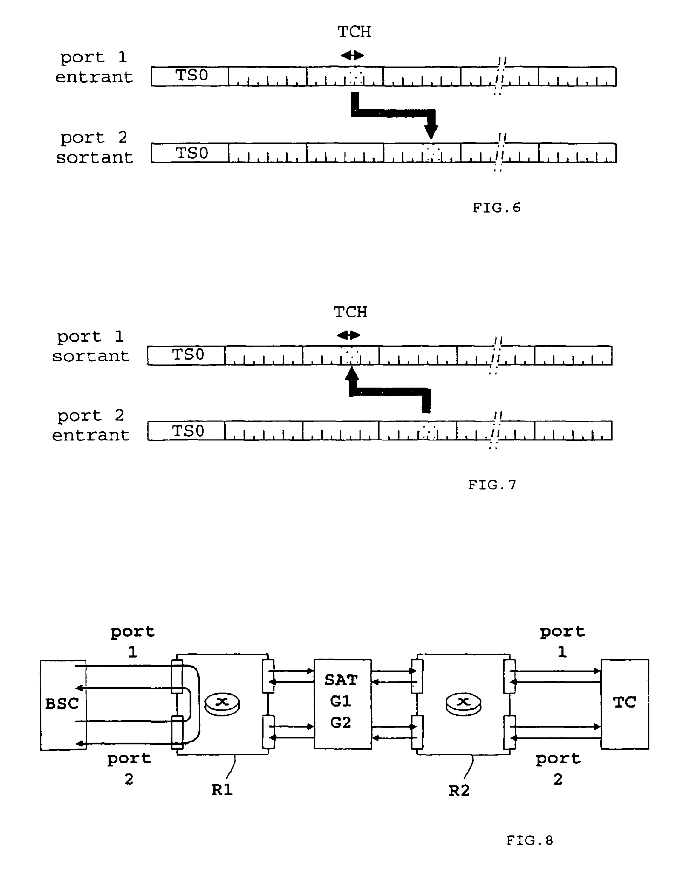

Pendant toute cette phase, et comme illustré sur la figure 5, les premier R1 et second R2 routeurs de trafic opèrent de manière totalement transparente (le premier canal montant TCH CM1 établi en entrée de R1 sur le port entrant n°1 étant restitué à l'identique en sortie de R1 sur le port sortant n°3, tout comme il est établi en entrée de R2 sur le port entrant n°3 et restitué à identique en sortie de R2 sur le port sortant n°1, et le second canal descendant TCH CD2 établi en entrée de R2 sur le port entrant n°2 étant restitué à l'identique en sortie sur le port sortant n°4, tout comme il est établi en entrée de R1 sur le port entrant n°4 et restitué à l'identique en sortie de R1 sur le port sortant n° 2).

Dans l'exemple illustré, le premier canal montant CM1 qui commence à entrer dans le premier routeur R1 à l'instant t1, sur son port entrant n°1, commence à sortir de ce même premier routeur R1 à l'instant t2, sur son port sortant n°2, sous la forme du second canal descendant CD2. Par ailleurs, un second canal montant CM2, issu du second terminal T2, qui commence à entrer dans le premier routeur R1 à l'instant t3, par exemple sur son port entrant n°2, commence à sortir de ce même premier routeur R1 à l'instant t4, par exemple sur son port sortant n°1, sous la forme du premier canal descendant CD1.

Les délais t2 - t1, ainsi que t4 - t3, sont essentiellement dus à la liaison satellite (de l'ordre de 2 x 270 ms pour le temps d'aller-retour via la liaison satellite, dans chaque sens), ceux introduits par les équipements du réseau étant généralement plus faibles (typiquement 60 ms).

Il est important de noter, comme illustré sur la figure 6, que la position du second canal descendant CD2 sur le port sortant n°2 n'a aucun lien avec la position du premier canal montant CM1 sur le port entrant n°1 du fait que le commutateur d'appels central MSC effectue un brassage des canaux de trafic. Réciproquement, comme illustré sur la figure 7, la position du premier canal descendant CD1 sur le port sortant n°1 n'a aucun lien avec la position du second canal montant CM2 sur le port entrant n°2. Préférentiellement, le processus de corrélation est également réalisé pour les flux réciproques. Le module de traitement MT du dispositif D compare alors entre elles certaines données choisies qui sont véhiculées par le (second) canal de trafic montant CMj, consécutivement à l'établissement du premier canal montant CM1, et les données véhiculées par le canal descendant CD1, le canal n°1 étant pris ici comme référence.

En d'autres termes, suite à l'établissement du canal n°1, montant et descendant, on identifie tous les canaux descendants qui s'établissent postérieurement à cet événement, dans les limites de la fenêtre d'admission FT qui délimite le retard minimum au retard maximum de cheminement des données. Puis, on traite successivement chacun des canaux j répondant à ce critère, d'abord en s'assurant qu'il y a corrélation entre le canal montant CM1 retardé et le canal descendant candidat CDj, et, le cas échéant, en confirmant par le trafic réciproque (canal montant CMj retardé avec le canal descendant CD1). Pour chaque canal n°j, c'est toujours avec le canal n°1 (dans cet exemple) que s'effectue la corrélation. Ensuite, on répète ce processus en partant de l'instant d'établissement du second canal, qui a pu faire partie de ces canaux n°j comparés une première fois avec le canal n°1, mais c'est exactement le même processus (canal montant CM2 comparé avec le canal descendant CDk, puis éventuellement canal montant CMk comparé avec le canal descendant CD2).

En cas de double comparaison/corrélation, le module de traitement MT ne décide du routage local du trafic local qu'à condition qu'il y ait, d'une part, corrélation de certaines données véhiculées par le premier canal montant CM1 avec les données de même type véhiculées par un (second) canal descendant CDj, et d'autre part, corrélation de certaines données véhiculées par le (second) canal montant CMj avec les données de même type véhiculées par le premier canal descendant CD1.

Dans l'exemple illustré sur la figure 4, plusieurs canaux descendants sont candidats à la corrélation avec le premier canal montant CM1, qui sert alors de référence de corrélation, et font l'objet d'une comparaison par le module de traitement MT. Il s'agit plus précisément des canaux descendants référencés CD2, sortant par le port 2, et CD3, sortant par le port 1. L'instant d'établissement du canal descendant CD3 ne se situant pas à l'intérieur de la fenêtre temporelle FT, les données de ce canal CD3 ne font donc pas l'objet d'une comparaison avec celles du premier canal montant CM1. La probabilité que ce canal CD3 soit le « reflet » du premier canal montant CM1 est considérée comme nulle (délai très au delà du délai typique). En revanche le canal descendant CD2 est à l'intérieur de la fenêtre temporelle FT et ses données font l'objet d'une comparaison avec celles du premier canal montant CM1. Le processus de corrélation s'établit également sur les trafics réciproques : trafic descendant CD1, avec trafic montant CM2.

Il est important de noter que le processus de comparaison/corrélation concerne tout canal candidat, qu'il soit véhiculé par un même port physique, ou par tout autre port physique, dès lors que son instant d'établissement se situe à l'intérieur de la fenêtre temporelle FT attachée à un premier canal montant CM1.

Seul le canal sortant sur le même port que le premier canal montant, et portant la même position au sein d'une trame, est exclu du processus de comparaison/corrélation, étant donné qu'il est en principe le canal de retour du canal considéré. En effet, lorsqu'un appel est établi, une position physique est réservée au sein de la trame véhiculée par le port entrant, et la même position physique est généralement réservée au sein de la trame véhiculée par le port sortant associé ; cette position physique constitue le support du canal de transmission, entrant et sortant. Il est donc inopportun de réaliser une corrélation entre le port entrant et le port sortant pour un même canal physique, les deux flux concernant un seul et même abonné.

La comparaison/corrélation peut porter sur des données de signalisation, échangées notamment entre les téléphones mobiles et le commutateur d'appels central MSC lors de l'établissement d'appel, et/ou des données de trafic.

Dans le cas d'une comparaison portant exclusivement sur des données de trafic, au moins trois possibilités peuvent être envisagées.

Une première possibilité consiste à comparer un signal binaire caractérisant la présence de paroles (ou voix) ou de silence sur un canal TCH.

Dans ce cas le module de traitement MT considère des données, appartenant à des canaux espacés dans le temps, comme corrélées lorsqu'elles représentent des signaux binaires identiques ou présentent une covariance élevée. Cette notion de covariance élevée est fixée à l'aide d'un seuil choisi, fonction essentiellement du nombre d'échantillons pris en compte dans le processus de corrélation.

Une deuxième possibilité consiste à comparer des données de voix à 64 kbps. Dans le cas d'une utilisation à l'interface A-bis ou A-ter, le module de traitement MT comporte alors un module de décompression, d'un type similaire à celui qui est implanté dans un transcodeur TC, lequel assure un décodage GSM standard. Le module de traitement MT retient alors que deux canaux espacés dans le temps sont corrélés lorsque le signal de référence, retardé, et le signal porté par le canal candidat, présentent une covariance élevée.

Une troisième possibilité consiste à comparer les valeurs d'un ou plusieurs paramètres critiques, les plus représentatifs du contenu et des caractéristiques temporelles et fréquentielles de la voix compressée. Ces paramètres critiques peuvent concerner soit les composantes les plus significatives de la voix compressée, soit une partie des composantes, telles que celles définies dans la norme GSM 06.10 pour le codage de type Full Rate (FR), ou dans la norme GSM 06.60 pour le codage de type Enhanced Full Rate (EFR), ou dans la norme GSM 06.20 pour le codage de type Half Rate (HR), ou encore dans la norme GSM 06.71 pour le codage de type Adaptive Multi-Rate (AMR), et dans les normes associées. Cette analyse peut également être opérée sur une combinaison linéaire ou non de plusieurs de ces paramètres considérés comme critiques pour ce processus de corrélation.

Parmi les paramètres critiques qui peuvent être utilisés pour la comparaison/corrélation dans le cas du codage de type Full Rate, on peut par exemple citer le « Log Area Ratio », qui comprend huit valeurs logarithmiques générées toutes les 20 ms et représentatives des coefficients de réflexion des filtres court terme, le « Block Amplitude », qui comprend une valeur générée toutes les 5 ms et représentative de l'amplitude du signal d'excitation, et les « RPE pulses N°1 à 13 », qui constituent un vecteur généré toutes les 5 ms et caractérisant le signal d'excitation.

La comparaison/corrélation effectuée sur les composantes de la voix compressée permet de réduire sensiblement le nombre de valeurs à corréler, et donc de réduire le volume de ressources devant être utilisées. Mais, cela permet également de réduire le délai entre l'apparition d'un nouveau canal et la mise en place du routage local lorsque la communication concerne un appel local.

Il est avantageux que le module de traitement MT effectue ses comparaisons/corrélations en déterminant la covariance ($cov_c(\tau)$) entre le signal $S_c$ porté par le canal candidat et le signal $S_{ref}$ porté par le canal de référence (premier canal montant CM1). L'expression de la covariance $cov_c(\tau)$ est donnée ci-dessous :

$$\mathbf{cov}_c(\tau) = \frac{1}{N} \cdot \sum_{i=1}^{N} \left[ s_c(t_i) - \bar{s}_c \right] \cdot \left[ s_{ref}(t_i - \tau) - \bar{s}_{ref} \right]$$

où :

- $\tau$ désigne différentes valeurs de retard entre le signal candidat $S_c$ et le signal de référence $S_{ref}$, sur une plage de valeurs centrées sur le retard typique (de l'ordre de 2 x 270 ms pour un déport par satellite, en prenant en compte le trajet aller/retour qui s'applique à une communication locale ainsi que le délai de traitement et d'acheminement par les différents éléments du réseau, notamment le transcodeur TC et le commutateur d'appels central MSC, de l'ordre de 60 ms),

- l'intervalle [1, N] représente la plage d'échantillons successifs pris en compte dans le processus de comparaison/corrélation,

- $\overline{s_c}$ est la valeur moyenne du signal $s_c$ sur la plage d'échantillons pris en compte, et

- $\overline{s_{ref}}$ est la valeur moyenne du signal $s_{ref}$ sur la plage d'échantillons pris en compte.

Le canal candidat qui est retenu par le module de traitement MT est alors celui qui présente la valeur de covariance la plus grande. Si aucun canal candidat ne présente une valeur de covariance excédant un seuil choisi, aucun canal n'est retenu et la communication établie pour l'abonné 1 (utilisant le premier terminal T1) est maintenue via son cheminement initial.

Bien entendu, d'autres critères de comparaison/corrélation peuvent être utilisés, et notamment l'analyse d'identité des échantillons avec seuil de tolérance (analyse de proximité) ou l'utilisation de techniques de type réseau neuronal.

On peut noter qu'il est de plus possible d'utiliser un critère de validité permettant de rejeter un signal retenu (et donc le canal correspondant) en cas de prise en compte d'échantillons non significatifs. Cela peut en effet arriver, notamment lorsque l'un des deux signaux analysés, ou les deux, sont faibles, par exemple en cas de silence prolongé de l'un des utilisateurs des téléphones mobiles T1 et T2, ou d'un signal anormalement atténué. Dans ces situations le routage local ne s'applique pas. La mise en oeuvre de ce critère de validité peut par exemple se faire au moyen du seuil choisi auquel est comparée chaque valeur de covariance.

Dans le cas d'une comparaison portant exclusivement sur des données de signalisation, au moins quatre possibilités peuvent être envisagées.

Une première possibilité consiste à comparer des données représentatives de l'identifiant de communication du terminal appelé (T2), comme par exemple le numéro de téléphone.

Dans ce cas, le module de traitement MT considère les données comme corrélées lorsque celles du canal de référence et celles d'un canal candidat représentent toutes les deux l'identifiant de communication du terminal appelé T2.

Une deuxième possibilité consiste à comparer des données représentatives, d'une part, de l'identifiant de communication du terminal appelé (T2), comme par exemple son numéro de téléphone, et d'autre part, de l'identifiant de communication du terminal appelant (T1), comme par exemple son numéro de téléphone.

Dans ce cas le module de traitement MT considère les données comme corrélées lorsque celles du canal de référence et celles d'un canal candidat représentent toutes les deux l'identifiant de communication du terminal appelé T2 et l'identifiant de communication du terminal appelant T1.

Une troisième possibilité consiste à comparer/corréler des données représentatives d'un identifiant de trafic associé à un identifiant de canal. Dans certains cas, tels que celui appelé TFO (« Tandem Free Operation »), il est en effet possible d'inclure dans les trames de signalisation un champ optionnel comportant, par exemple, un identifiant désignant le trafic auquel elles appartiennent, ainsi qu'un identifiant désignant le canal qui les véhicule.

Dans ce cas le module de traitement MT considère que des données du champ de signalisation véhiculé par un canal candidat sont corrélées à des données du même champ de signalisation véhiculé par le canal de référence (CM1), lorsqu'elles représentent le même identifiant de trafic et le même identifiant de canal.

On peut également envisager une quatrième possibilité consistant par exemple à comparer/corréler un ou deux identifiants de communication et les identifiant de trafic et identifiant de canal.

Par ailleurs, on peut également envisager une comparaison/corrélation portant à la fois sur des données de trafic et sur des données de signalisation. Ainsi, on peut par exemple envisager une comparaison/corrélation portant à la fois sur l'identifiant de communication de l'appelé et sur des données de voix compressées.

Il est rappelé que ce qui précède s'applique aussi bien à la comparaison/corrélation simple, dans laquelle le seul premier canal montant CM1 sert de canal de référence, mais également à la comparaison/corrélation double, dans laquelle les premier CM1 et second CM2 canaux montants servent tous les deux de canaux de référence.

Afin de pouvoir comparer/corréler les données véhiculées par le premier canal montant CM1 à celles véhiculées par un canal candidat, qui lui parviennent postérieurement, le module de traitement MT, du dispositif D, copie tout d'abord lesdites données à comparer. Puis, il applique aux données copiées un décalage temporel qui est choisi en fonction du temps aller/retour pour parvenir au niveau du commutateur d'appels central MSC et revenir. Il peut alors comparer ces données copiées et décalées temporellement aux données véhiculées par chaque canal candidat établi à l'intérieur de la fenêtre temporelle FT. En présence de données de voix compressées, le module de traitement MT est agencé de manière à les décompresser, si nécessaire, après les avoir copiées.

L'exemple de la figure 4 illustre une comparaison/corrélation double sur des données de voix compressées. Comme on peut le constater, la comparaison/corrélation effectuée par le module de traitement MT montre, d'une part, que les données compressées de la trame P1 du premier canal montant CM1 sont corrélées aux données compressées de la trame P1 du second canal descendant CD2, et d'autre part, que les données compressées de la trame P1 du second canal montant CM2 sont corrélées aux données compressées de la trame P1 du premier canal descendant CD1.

En d'autres termes, on se trouve dans une situation dans laquelle le canal i sur le port x est égal au canal j sur le port y, à la fois en entrée de port et en sortie de port (plus précisément, le signal entrant sur le canal i au niveau du port x côté BSC est égal au signal sortant du canal j au niveau du port y côté BSC, et le signal sortant du canal i au niveau du port x côté BSC est égal au signal entrant sur le canal j au niveau du port y côté BSC). Le module de traitement MT en déduit alors que le trafic du premier canal montant CM1 est un trafic local. Il ordonne alors au module de routage MR du premier routeur R1 de router localement ce trafic jusqu'à la fin de la communication, sauf contrordre. Un routage local est alors mis en place, par le premier routeur R1, en direct entre le canal i du port x (ici le n°1) et le canal j du port y (ici le n°2), dans les deux sens, et le déport par satellite est suspendu pour les quatre canaux correspondants. Cette situation est illustrée sur la figure 8.

Le dispositif de routage local D, selon l'invention, peut être agencé de manière à permettre des communications en mode dit « conférence ». Dans ce mode, un troisième téléphone T3, fixe ou mobile, appelant ou appelé, se joint à la communication établie entre les premier T1 et second T2 téléphones mobiles.

Pour ce faire, le trafic entrant, provenant du commutateur d'appels central MSC via le transcodeur TC, est analysé pendant toute la durée d'une communication, c'est à dire tant que des trames TCH sont présentes sur chaque canal établi. Ainsi, dès que le téléphone mobile T3 d'un troisième abonné tente de se joindre, en mode conférence, à une communication en cours entre les téléphones mobiles T1 et T2, le second routeur R2 détecte les trames de parole qu'il transmet à la fois en entrée du canal i du port x et en entrée du canal j du port y, objets du routage local.

Le second routeur R2 transmet alors au dispositif D du premier routeur R1 un message dédié lui signalant qu'il vient de détecter des trames de parole en provenance du transcodeur TC. Ce message contient de préférence le numéro de port et le numéro de canal concernés. A réception de ce message, le module de traitement MT du dispositif D ordonne au module de routage MR du premier routeur R1 de suspendre le routage local et de reprendre un routage classique des trames de parole vers le commutateur d'appels central MSC, via le lien satellite G1, SAT, G2.

Le dispositif de routage local D, selon l'invention, peut être également agencé de manière à permettre l'écoute du trafic local montant, objet d'un routage local, via le commutateur d'appels central MSC.

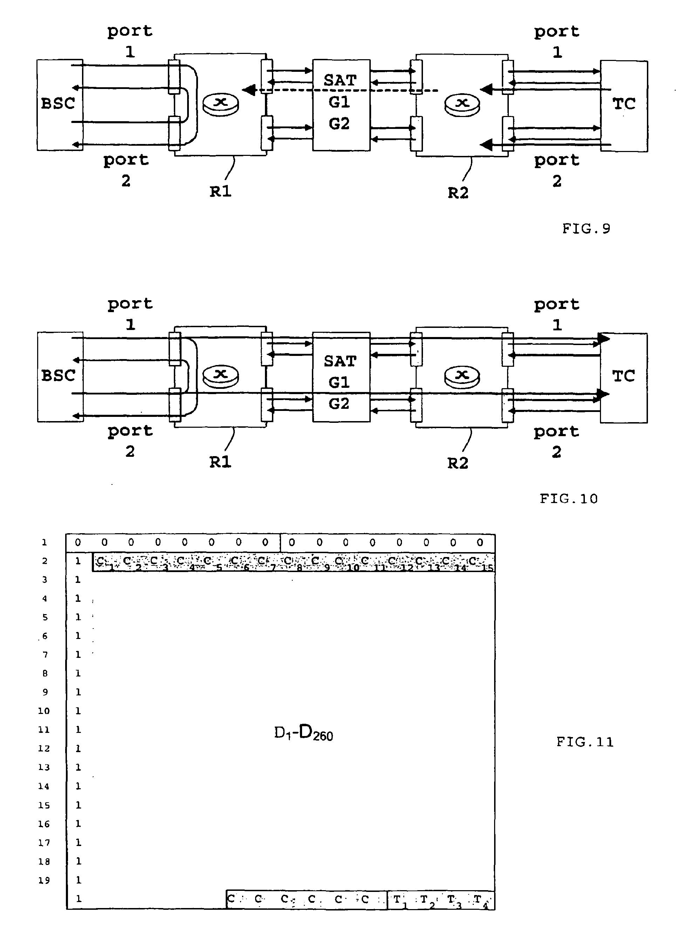

Dans ce cas, le module de traitement MT du dispositif D est agencé, lorsqu'il reçoit une demande d'écoute sur des premier CM1 et second CM2 canaux montants, pour ordonner au module de routage MR du premier routeur R1 de dupliquer le trafic véhiculé par les premier CM1 et second CM2 canaux montants afin, d'une part, de le router localement et directement selon le mécanisme décrit précédemment, et d'autre part, de le transmettre, via le lien satellite G1, SAT et G2, au commutateur d'appels central MSC. Le trafic descendant n'est pas concerné du fait qu'il n'a pas besoin de transiter par la liaison satellite dès lors que le routage local est activé. Cette situation est illustrée sur la figure 10.

Le processus de remontée d'un appel local à des fins d'écoute peut être activé pour l'ensemble des communications, ou pour une partie des communications seulement, de façon contrôlée, de préférence via le second routeur R2.

Le dispositif de routage local D, selon l'invention, peut être également agencé de manière à permettre au réseau de transmettre les données de trafic dans des trames de type TRAU (pour « Transcoder/Rate Adaptor Unit »), sur les interfaces A-bis et A-ter. Dans ce cas, le transcodeur TC est adapté de manière à convertir les données de parole comprimées à 13 kbps en données de parole numérisées à 64 kbps afin de rendre les canaux de parole compatibles avec le commutateur d'appels central MSC.

Un exemple de trame TRAU est illustré sur la figure 11, dans le cas de données de voix compressées en mode Full Rate (FR).

La trame TRAU comporte 20 mots de 16 bits, la séquence de synchronisation, qui se trouve sur les contours de la trame, étant constituée par les 16 premiers bits à 0, puis un bit à 1 à chaque début de mot de 16 bits. Les bits $C_1$ à $C_{21}$ sont les bits de contrôle, caractérisant le contenu de la trame (notamment trame de parole, trame de repos, trame non valide, bruit de confort, et analogue). Les bits $T_1$ à $T_4$ sont les bits dits d'alignement temporel (ou « Time Alignment »), utilisés pour le calage temporel des trames effectué par le transcodeur distant, sous contrôle de la station de base BTS concernée. Enfin, $D_1$ à $D_{260}$ sont les données utiles véhiculées par la trame TRAU.

Une telle trame est transmise à raison de deux bits par trame E1, pour un canal Full Rate (à 16 kbps).

Un procédé de compression de trames TRAU plus sophistiqué peut être également utilisé conjointement à l'invention afin de réduire encore plus les capacités satellite utilisées. Ce procédé est décrit dans la demande de brevet français FR 03 14 755, dont le contenu descriptif est ici intégré par référence.

Il consiste à transmettre, d'une part, les trames de parole telles quelles, ou sous une forme compactée en supprimant les informations redondantes qu'elles contiennent, et d'autre part, les trames de repos et les trames non valides sous une forme compactée par élimination, en plus des informations redondantes, du champ $D_1$ à $D_{260}$, qui n'est, dans ce cas, pas significatif. Les trames de bruit de confort (trames dites SID pour « SIlence Description ») sont traitées de la même manière que les trames de silence, mais en transmettant le champ $D_1$ à $D_{260}$, de manière asynchrone afin de contribuer à lisser le flux compressé en vue de l'utilisation de la plus petite capacité possible pour la transmission du flux compressé.

Lorsque le routage local du trafic local est activé, il est donc nécessaire de transmettre des informations au transcodeur TC couplé au commutateur d'appels central MSC. Pour ce faire, deux solutions peuvent être envisagées.

Une première solution consiste à générer au niveau du module de traitement MT du dispositif D, pour chaque canal concerné par un routage local, un indicateur binaire précisant que la communication correspondante est toujours en cours, puis à ordonner au premier routeur R1 de le transmettre au second routeur R2 via le lien satellite G1, SAT et G2.

Dès que les trames TRAU deviennent absentes en entrée i du port x et/ou en entrée j du port y, objets du routage local, l'indicateur binaire relatif à la communication change d'état afin de signaler au second routeur R2 que la communication est terminée.

Tant que l'indicateur binaire signalant une communication en cours est actif, le second routeur R2 génère des trames TRAU et les délivre en lieu et place des trames que le transcodeur TC aurait reçues en l'absence du routage local. Ces trames TRAU sont soit des trames de repos, soit des trames de parole fictives, destinées à permettre le fonctionnement normal du réseau du côté du transcodeur TC et du commutateur d'appels central MSC. La partie amont du réseau, qui contient ces deux derniers équipements, est ainsi en quelque sorte « leurrée ». Ils ont en effet l'impression de continuer à véhiculer une communication, alors que les trames qu'ils véhiculent ne contiennent pas de données utiles, hormis en mode conférence ou en présence d'une écoute.

Lorsque la communication prend fin, l'indicateur binaire change d'état, si bien que le second routeur R2 cesse de générer des trames TRAU à destination du transcodeur TC sur la sortie i du port x et sur la sortie j du port y.

Une seconde solution consiste à agencer le module de traitement MT du dispositif D de manière à ordonner au premier routeur R1 de transmettre à destination du second routeur R2 des données du même type que celles qui sont transmises en présence de trames de repos ou de trames non valides. Ainsi, seuls les bits de contrôle et le mot d'alignement temporel (bits $T_1$ à $T_4$) sont alors transmis par le premier routeur R1 sous une forme compactée, afin d'éliminer toute information non pertinente ou redondante.

Le second routeur R2 reconstitue des trames dans lesquelles les bits de contrôle et le mot d'alignement temporel reproduisent à l'identique ce qui était présent en entrée du premier routeur R1, pour les canaux concernés par le routage local. Seules les données $D_1$ à $D_{260}$ ne sont pas restituées à l'identique, ce qui ne pose pas de problème étant donné que le contenu des trames n'est pas utilisé, hormis en cas d'écoute.

Le même mécanisme s'applique dans le sens descendant, c'est-à-dire du second routeur R2 vers le premier routeur R1. Les trames restituées par le premier routeur R1, sur la sortie i de son port x et la sortie j de son port y, sont alors régénérées en utilisant les données compactées en provenance du second routeur R2, pour ce qui concerne les bits de contrôle et le mot d'alignement temporel. Le champ de données $D_1$ à $D_{260}$ des trames régénérées est rempli avec le champ de données $D_1$ à $D_{260}$ précédemment copié sur le canal d'entrée montant, et stocké temporairement dans une mémoire.

Le premier routeur R1 assure ainsi la fonction de routage local du trafic local, tout en restituant des trames qui reproduisent fidèlement les trames TRAU qui auraient été obtenues sans routage local. Le processus de calage temporel qui consiste à contrôler, au moyen de la station de base BTS concernée, le phasage des trames qui lui sont appliquées en entrée par action sur le transcodeur, est notamment reproduit ici par le premier routeur R1, sous contrôle du module de traitement MT du dispositif D.

Cela permet d'émuler la partie du réseau, située du côté du commutateur d'appels central MSC, d'une manière beaucoup plus fidèle, et donc d'éviter d'avoir à adapter les stations de base BTS et/ou le contrôleur BSC. Le leurre est alors total vis à vis des équipements situés au niveau du site distant (BTS pour un déport A-bis, ou BTS et BSC pour un déport A-ter), et vis à vis de la partie du réseau comprenant le transcodeur TC et le commutateur d'appels central MSC.

Enfin, le dispositif de routage local D, selon l'invention, peut être également agencé, en présence d'une comparaison/corrélation de données de trafic, de manière à permettre une réduction du délai « bout-en-bout » qui est présent au début de la communication. Il est rappelé que ce délai initial est typiquement de l'ordre de 600 ms (2 x 270 ms pour le temps de transmission aller/retour sur le lien satellite G1, SAT, G2, plus environ 60 ms pour le délai introduit par les équipements du réseau). Pour ce faire, le module de traitement MT du dispositif D est chargé, lorsque le routage local et direct a été établi, d'ordonner au premier routeur R1 de réduire le délai bout-en-bout prévu.

Cette réduction du délai bout-en-bout se fait de préférence de façon progressive vers une valeur choisie, par exemple égale à zéro. Elle se fait de préférence au cours des périodes de silence ou de façon décrémentale au cours des périodes de parole et de silence.

Le dispositif de routage local D selon l'invention, et notamment son module de traitement MT, peut être réalisé sous la forme de circuits électroniques, de modules logiciels (ou informatiques), ou d'une combinaison de circuits et de logiciels.

L'invention permet de réduire de façon importante la capacité satellite utilisée, en maintenant localement le trafic local. Ainsi, sur des sites de déploiement où il n'existe généralement pas d'infrastructure terrestre, et dans lesquels le trafic urbain local peut constituer jusqu'à 80% du volume de trafic, le gain de capacité satellite peut atteindre environ 80%. En outre en combinant le routage local selon l'invention à un procédé perfectionné de compression de trames TRAU (du type de celui présenté ci-avant), on peut encore réduire d'environ 50% le trafic transmis par satellite, ce qui offre un gain global de capacité satellite d'environ 90%.

L'invention ne se limite pas aux modes de réalisation de dispositif de routage local et de routeur de trafic décrits ci-avant, seulement à titre d'exemple, mais elle englobe toutes les variantes que pourra envisager l'homme de l'art dans le cadre des revendications ci-après.

**Revendications**

1. Dispositif (D) de routage de trafic entre des terminaux de communication (T1, T2), pour un routeur de trafic (R1) raccordé, via une portion de réseau de transmission, à un réseau de communication radio comprenant un commutateur d'appels (MSC), **caractérisé en ce qu'**il comprend des moyens de traitement (MT) agencés, en cas d'établissement de premier et second canaux de trafic montants entre des terminaux appelant (T1) et appelé (T2) et ledit commutateur d'appels (MSC) et de premier et second canaux de trafic descendants entre ledit commutateur d'appels (MSC) et lesdits terminaux appelant (T1) et appelé (T2), pour comparer entre elles des données choisies véhiculées dans ledit premier canal de trafic montant et dans au moins un canal de trafic descendant établi postérieurement audit premier canal de trafic montant et dans une fenêtre temporelle (FT) choisie, puis, en cas de comparaison indiquant une corrélation entre lesdites données véhiculées, pour ordonner audit routeur de trafic (R1) de router localement et directement le trafic du premier canal montant vers le second canal descendant et du second canal montant vers le premier canal descendant, sans transmission dudit trafic audit commutateur d'appels (MSC).

2. Dispositif selon la revendication 1, **caractérisé en ce que** lesdits moyens de traitement (MT) sont agencés pour comparer entre elles des données choisies véhiculées dans ledit premier canal de trafic montant et dans chaque canal de trafic descendant établi postérieurement audit premier canal de trafic montant et dans ladite fenêtre temporelle (FT) choisie.

3. Dispositif selon l'une des revendications 1 et 2, **caractérisé en ce que** lesdits moyens de traitement (MT) sont agencés pour copier lesdites données à comparer, véhiculées par ledit premier canal montant, puis pour appliquer auxdites données copiées un décalage temporel choisi en fonction du temps aller/retour pour parvenir au niveau dudit commutateur d'appels et revenir, et pour comparer lesdites données copiées et décalées temporellement aux données véhiculées par chaque canal descendant établi postérieurement audit premier canal de trafic montant et dans ladite fenêtre temporelle (FT) choisie.

4. Dispositif selon la revendication 3, **caractérisé en ce que** lesdits moyens de traitement (MT) sont agencés pour décompresser lesdites données après les avoir copiées.

5. Dispositif selon la revendication 1, **caractérisé en ce que** lesdits moyens de traitement (MT) sont également agencés pour comparer entre elles les données choisies véhiculées dans ledit second canal de trafic montant et le premier canal de trafic descendant, puis, en cas de comparaison indiquant également une corrélation entre ces données véhiculées, pour ordonner audit routeur de trafic (R1) de router localement et directement le trafic du premier canal montant vers le second canal descendant et du second canal montant vers le premier canal descendant, sans transmission dudit trafic audit commutateur d'appels (MSC).

6. Dispositif selon la revendication 1, **caractérisé en ce que** lesdites données comparées sont des données de signalisation et/ou des données de trafic.

7. Dispositif selon la revendication 6, **caractérisé en ce que** lesdites données de signalisation sont au moins représentatives de l'identifiant de communication du terminal appelé (T2), et **en ce que** lesdits moyens de traitement (MT) sont agencés pour considérer lesdites données comme corrélées lorsqu'elles représentent un même identifiant de communication de terminal appelé (T2).

8. Dispositif selon la revendication 7, **caractérisé en ce que** lesdites données de signalisation sont représentatives de l'identifiant de communication du terminal appelant (T1), et **en ce que** lesdits moyens de traitement (MT) sont agencés pour considérer lesdites données comme corrélées lorsqu'elles représentent également un même identifiant de communication de terminal appelant (T1).

9. Dispositif selon la revendication 6, **caractérisé en ce que** lesdites données de signalisation sont représentatives d'un identifiant de trafic associé à un identifiant de canal, et **en ce que** lesdits moyens de traitement (MT) sont agencés pour considérer lesdites données comme corrélées lorsqu'elles représentent un même identifiant de trafic associé à un même identifiant de canal.

10. Dispositif selon la revendication 6, **caractérisé en ce que** lesdites données de trafic sont des signaux binaires caractérisant une présence de parole ou de silence, et **en ce que** lesdits moyens de traitement (MT) sont agencés pour considérer lesdites données comme corrélées lorsqu'elles représentent des signaux binaires identiques ou quasi-identiques.

**11.** Dispositif selon la revendication 6, **caractérisé en ce que** lesdites données de trafic sont des données de voix non compressées.

**12.** Dispositif selon la revendication 6, **caractérisé en ce que** lesdites données de trafic sont constituées par les valeurs d'un ou plusieurs paramètres critiques, les plus représentatifs du contenu et des caractéristiques temporelles et fréquentielles de la voix compressée.

**13.** Dispositif selon la revendication 10, **caractérisé en ce que** lesdits moyens de traitement (MT) sont agencés pour déterminer une valeur de covariance entre lesdites données véhiculées, et pour considérer des données comme corrélées lorsqu'elles présentent la valeur de covariance la plus élevée, et que ladite valeur est supérieure à un seuil choisi.

**14.** Dispositif selon la revendication 1, **caractérisé en ce que** lesdits moyens de traitement (MT) sont agencés, en cas de réception d'une instruction signalant l'établissement de troisième canaux montant et descendant entre un troisième terminal de communication (T3) et ledit commutateur d'appels (MSC), en vue d'une liaison en mode « conférence » avec lesdits terminaux appelant (T1) et appelé (T2), pour ordonner audit routeur de trafic (R1) d'interrompre ledit routage de trafic local et direct et de reprendre un routage via ledit commutateur d'appels (MSC).

**15.** Dispositif selon la revendication 1, **caractérisé en ce que** lesdits moyens de traitement (MT) sont agencés, en cas de demande d'écoute sur lesdits premier et second canaux montants, pour ordonner audit routeur de trafic (R1) de dupliquer le trafic véhiculé par lesdits premier et second canaux montants afin, d'une part, de le router localement et directement, et d'autre part, de le transmettre, via ladite portion de réseau de transmission, audit commutateur d'appels (MSC).

**16.** Dispositif selon la revendication 1, **caractérisé en ce que** lesdits moyens de traitement (MT) sont agencés, une fois ledit routage local et direct établi, pour ordonner audit routeur de trafic (R1) de transmettre en direction d'un autre routeur de trafic (R2) couplé à son routeur de trafic (R1) via ladite portion de réseau de transmission, des indicateurs binaires signalant que la liaison directe entre les terminaux appelant (T1) et appelé (T2) est en cours.

**17.** Dispositif selon la revendication 1, **caractérisé en ce que** lesdits moyens de traitement (MT) sont agencés, une fois ledit routage local et direct établi, pour ordonner audit routeur de trafic (R1) de transmettre, sous une forme compressée, en direction d'un autre routeur de trafic (R2) couplé à son routeur de trafic (R1) via la portion de réseau de transmission, des bits de contrôle associés à des mots d'alignement temporel, correspondant à des trames de repos ou des trames non valides, pendant la durée de la communication entre lesdits terminaux appelant (T1) et appelé(T2).

**18.** Dispositif selon la revendication 1, **caractérisé en ce que** lesdits moyens de traitement (MT) sont agencés, une fois ledit routage local et direct établi, pour ordonner audit routeur de trafic (R1) de réduire un délai de transmission différée des trames du trafic à router localement et directement, initialement représentatif du temps aller/retour pour parvenir au niveau dudit commutateur d'appels (MSC) et revenir.

**19.** Dispositif selon la revendication 18, **caractérisé en ce que** lesdits moyens de traitement (MT) sont agencés pour ordonner une réduction de délai de transmission progressive vers une valeur choisie.

**20.** Routeur de trafic (R1) pour un réseau de communication radio, comportant au moins une portion de réseau de transmission et un commutateur d'appels (MSC), **caractérisé en ce qu'**il comprend au moins un dispositif de routage (D) selon l'une des revendications précédentes.

**Claims**

**1.** A device (D) for routing traffic between communications terminals (T1, T2) for a traffic router (R1) connected via a portion of a transmission network to a radiocommunications network including a call switch (MSC), the device being **characterized in that** it comprises processor means (MT) arranged, in the event of first and second up traffic channels being set up between calling and called terminals (T1, T2) and said call switch (MSC), and first and second down traffic channels being set up between said call switch (MSC) and said calling and called terminals (T1, T2), to compare selected data conveyed in said first up traffic channel and in at least one down traffic channel set up after said first up traffic channel and in a selected time window (FT), and then in the event of the comparison finding a correlation between said data being conveyed, to instruct said traffic router (R1) to route the traffic locally and directly from the first up channel to the second down channel, and from the second up channel to the first down channel, without said traffic being sent to said call switch (MSC).

2. A device according to claim 1, **characterized in that** said processor means (MT) are arranged to compare selected data conveyed in said first up traffic channel and in each down traffic channel set up after said first up traffic channel and within said selected time window (FT).

3. A device according to claim 1 or claim 2, **characterized in that** said processor means (MT) are arranged to copy said data for comparison as conveyed by said first up channel and then to apply to said copied data a time offset that is selected as a function of the go-and-return time for reaching said call switch and returning therefrom, and to compare said copied and time-offset data with the data conveyed by each down channel set up after said first up traffic channel and within said selected time window (FT).

4. A device according to claim 3, **characterized in that** said processor means (MT) are arranged to decompress said data after copying it.

5. A device according to claim 1, **characterized in that** said processor means (MT) are also arranged to compare the selected data conveyed in said second up traffic channel and in the first down the traffic the channel, and in the event, of the comparison also finding a correlation between said conveyed data, to instruct said traffic router (R1) to route locally and directly the traffic from the first up channel to the second down channel and from the second up channel to the first down channel, without sending said traffic to said call switch (MSC).

6. A device according to claim 1, **characterized in that** said compared data is signaling data and/or traffic data.

7. A device according to claim 6, **characterized in that** said signaling data is at least representative of the call identifier of the called terminal (T2), and **in that** said processor means (MT) are arranged to consider said data as being correlated when it presents the same call identifier for the called terminal (T2).

8. A device according to claim 7, **characterized in that** said signaling data is representative of the call identifier of the calling terminal (T1), and **in that** said processor means (MT) are arranged to consider said data as being correlated when it likewise represents the same call identifier for the calling terminal (T1).

9. A device according to claim 6, **characterized in that** said signaling data is representative of a traffic identifier associated with a channel identifier, and **in that** said processor means (MT) are arranged to consider said data as being correlated when it represents the same traffic identifier associated with the same channel identifier.

10. A device according to claim 6, **characterized in that** said traffic data is in the form of binary signals characterizing the presence of speech or silence, and **in that** said processor means (MT) are arranged to consider said data as being correlated when it represents binary signals that are identical or quasi-identical.

11. A device according to claim 6, **characterized in that** said traffic data is non-compressed voice data.

12. A device according to claim 6, **characterized in that** said traffic data is constituted by the values of one or more critical parameters that are the most representative of the content and the time and frequency characteristics of compressed voice.

13. A device according to claim 10, **characterized in that** said processor means (MT) are arranged to determine a covariance value between said conveyed data, and to consider data as being correlated when it presents the highest covariance value, and when said value is greater than a selected threshold.

14. A device according to claim 1, **characterized in that**, on receiving an instruction indicating that third up and down channels have been set up between a third communications terminal (T3) and said call switch (MSC) for the purpose of setting up a "conference" mode connection with said calling and called terminals (T1, T2), said processor means (MT) are arranged to instruct said traffic router (R1) to interrupt said local and direct routing of the traffic and to return to routing via said call switch (MSC).

15. A device according to claim 1, **characterized in that**, in the event of a request for monitoring said first and second up channels, said processor means (MT) are arranged to instruct said traffic router (R1) to duplicate the traffic conveyed by said first and second up channels firstly to route it locally and directly, and secondly to transmit it via said transmission network portion to said call switch (MSC).

16. A device according to claim 1, **characterized in that**, once said local and direct routing has been set up, said processor means (MT) are arranged to instruct said traffic router (R1) to send binary flags to another traffic router (R2) that is coupled to said traffic router (R1) via said traffic and network portion, the flags indicating that the direct connection between the calling and called terminals (T1, T2) is ongoing.

17. A device according to claim 1, **characterized in that**, once said local and direct routing has been set up, said processor means (MT) are arranged to instruct said traffic router (R1) to send control bits in a compressed form to another traffic router (R2) that is coupled to said traffic router (R1) via said transmission network portion, the control bits being the control bits associated with time argument words corresponding to rest frames or to non-valid frames throughout the duration of the call between said calling and called terminals (T1, T2).

18. A device according to claim 1, **characterized in that**, once said local and direct routing has been set up, said processor means (MT) are arranged to instruct said traffic router (R1) to reduce a deferred transmission delay of the traffic frames to be routed locally and directly, which delay is initially representative of the go-and-return time needed for reaching said call switch (MSC) and to return therefrom.

19. A device according to claim 18, **characterized in that** said processor means (MT) are arranged to instruct progressive reduction in the transmission delay towards a selected value.

20. A traffic router (R1) for a radiocommunications network including at least a transmission network portion and a call switch (MSC), the router being **characterized in that** it includes at least one routing device (D) according to any preceding claim.

**Patentansprüche**

1. Vorrichtung (D) zur Leitweglenkung von Datenverkehr zwischen Kommunikations-Endgeräten (T1, T2) für einen Datenverkehrsrouter (R1), der über einen Übertragungsnetzabschnitt an ein Funkkommunikatiohsnetz mit einer Vermittlungsstelle (Mobile Switching Center, MSC) angeschlossen ist, **dadurch gekennzeichnet, dass** die besagte Vorrichtung Verarbeitungsmittel (MT) beinhaltet, die so angeordnet sind, dass sie im Fall der Einrichtung von ersten und zweiten Aufwärts-Datenverkehrskanälen zwischen, anrufenden (T1) und angerufenen (T2) Endgeräten und der besagten Vermittlungsstelle (MSC) und von ersten und zweiten Abwärts-Datenverkehrskanälen zwischen der besagten Vermittlungsstelle (MSC) und den besagten anrufenden (T1) und angerufenen (T2) Endgeräten untereinander ausgewählte Daten vergleichen, die auf dem besagten ersten Aufwärts-Datenverkehrskanal und auf mindestens einem später als der besagte erste Aufwärts-Datenverkehrskanal eingerichteten Abwärts-Datenverkehrskanal und in einem gewählten Zeitfenster (FT) übertragen werden, und dann im Fall eines Vergleichs, der auf eine Korrelation zwischen den besagten übertragenen Daten hindeutet, den besagten Datenverkehrsrouter (R1) anweisen, örtlich und direkt den Verkehr des ersten Aufwärts-Datenverkehrskanals zum zweiten Abwärts-Datenverkehrskanal und vom zweiten Aufwärts-Datenverkehrskanal zum ersten Abwärts-Datenverkehrskanal zu lenken, ohne dass eine Übertragung des besagten Verkehrs an die besagte Vermittlungsstelle (MSC) stattfindet.

2. Vorrichtung gemäß Anspruch 1, **dadurch gekennzeichnet, dass** die besagten Verarbeitungsmittel (MT) so angeordnet sind, dass sie untereinander ausgewählte Daten, vergleichen, die auf dem besagten ersten. Aufwärts-Datenverkehrskanal und auf jedem eingerichteten. Abwärts-Datenverkehrskanal und im besagten gewählten Zeitfenster (FT) übertragen werden,

3. Vorrichtung gemäß einem der Ansprüche 1 und 2, **dadurch gekennzeichnet, dass** die besagten Verarbeitungsmittel (MT) so angeordnet sind, dass sie die besagten zu vergleichenden Daten, die auf dem besagten ersten Aufwärts Datenverkehrskanal übertragen werden, kopieren und anschließend auf die besagten kopierten Daten eine zeitverschiebung anwenden, die in Abhängigkeit von der Hin- und Rücklaufzeit zur besagten Vermittlungsstelle und zurück gewählt wird, und die besagten kopierten und zeitlich verschobenen Daten mit den Daten vergleichen, die auf jedem später als der besagte erste Aufwärts-Datenverkehrskanal eingerichteten Abwärts-Datenverkehrskanal und im besagten gewählten Zeitfenster (FT) übertragen werden.

**4.** Vorrichtung gemäß Anspruch 3, **dadurch gekennzeichnet, dass** die besagten Verarbeitungsmittel (MT) so angeordnet sind, dass sie die besagten Daten dekomprimieren, nachdem sie sie kopiert haben.

**5.** Vorrichtung gemäß Anspruch 1, **dadurch gekennzeichnet, dass** die besagten Verarbeitungsmittel (MT) ferner so angeordnet sind, dass sie untereinander die ausgewählten Daten vergleichen, die auf dem zweiten Aufwärts-Datenverkehrskanal und dem ersten Abwärts-Datenverkehrskanal übertragen werden, und anschließend im Fall eines Vergleichs, der ebenfalls auf eine Korrelation zwischen diesen übertragenen Daten hindeutet, den besagten Datenverkehrsrouter (R1) anweisen, örtlich und direkt den Verkehr vom ersten Aufwärts-Datenverkehrskanal zum zweiten Abwärts-Datenverkehrskanal und vom zweiten Aufwärts-Datenverkehrskanal zum ersten Abwärts-Datenverkehrskanal zu lenken, ohne dass eine Übertragung des besagten Verkehrs an die besagte Vermittlungsstelle (MSC) stattfindet.

**6.** Vorrichtung gemäß Anspruch 1, **dadurch gekennzeichnet, dass** die besagten verglichenen Daten Signalisierungs- und/oder Verkehrsdaten sind.

**7.** Vorrichtung gemäß Anspruch 6, **dadurch gekennzeichnet, dass** die besagten Signalisierungsdaten mindestens repräsentativ für die Kommunikationskennung des angerufenen Endgeräts (T2) sind, und **dadurch**, dass die besagten Verarbeitungsmittel (MT) so angeordnet sind, dass sie die besagten Daten als korreliert betrachten, wenn diese eine identische Kennung des angerufenen Endgeräts (T2) repräsentieren.

**8.** Vorrichtung gemäß Anspruch 7, **dadurch gekennzeichnet, dass** die besagten Signalisierungsdaten repräsentativ für die Kommunikationskennung des anrufenden Endgeräts (T1) sind, und **dadurch**, dass die besagten Verarbeitungsmittel (MT) so angeordnet sind, dass sie die besagten Daten als korreliert betrachten, wenn diese ebenfalls eine identische Kommunikationskennung des anrufenden Endgeräts (T1) repräsentieren.

**9.** Vorrichtung gemäß Anspruch 6, **dadurch gekennzeichnet, dass** die besagten Signalisierungsdaten repräsentativ für eine einer Kanalkennung zugeordnete Datenverkehrskennung sind, und **dadurch**, dass die besagten Verarbeitungsmittel (MT) so angeordnet sind, dass sie die besagten Daten als korreliert betrachten, wenn diese eine identische Datenverkehrskennung repräsentieren, die einer identischen Kanalkennung zugeordnet ist.

**10.** Vorrichtung gemäß Anspruch 6, **dadurch gekennzeichnet, dass** die besagten Verkehrsdaten Binärsignale sind, die ein **dadurch**, dass die besagten Verarbeitungsmittel (MT) so angeordnet sind, dass sie die besagten Daten als korreliert betrachten, wenn diese identische oder quasi-identische Binärsignale repräsentieren.

**11.** Vorrichtung gemäß Anspruch 6, **dadurch gekennzeichnet, dass** die besagten Verkehrsdaten unkomprimierte Sprachdaten sind.

**12.** Vorrichtung gemäß Anspruch 6, **dadurch gekennzeichnet, dass** die besagten Verkehrsdaten aus den Werten eines oder mehrerer kritischer Parameter gebildet werden, die am repräsentativsten für den Inhalt sowie für die Zeit- und Frequenzeigenschaften des komprimierten Sprachsignals sind.

**13.** Vorrichtung gemäß Anspruch 10, **dadurch gekennzeichnet, dass** die besagten Verarbeitungsmittel (MT) so angeordnet sind, dass sie einen Kovarianzwert zwischen den besagten übertragenen Daten ermitteln und Daten als korreliert betrachten, wenn diese den höchsten Kovarianzwert repräsentieren und der besagte Wert über einer gewählten Schwelle liegt.

**14.** Vorrichtung gemäß Anspruch 1, **dadurch gekennzeichnet, dass** die besagten Verarbeitungsmittel (MT) so angeordnet sind, dass sie im Fall des Empfangs einer Anweisung, welche die Einrichtung dritter Aufwärts- und Abwärtskanäle zwischen einem dritten Kommunikations-Endgerät (T3) und der besagten Vermittlungsstelle (MSC) im Hinblick auf eine Verbindung mit den besagten anrufenden (T1) und angerufenen (T2) Endgeräten im "Konferenzmodus" signalisiert, den besagten Datenverkehrsrouter (R1) anweisen, die besagte örtliche und direkte Leitweglenkung zu unterbrechen und eine Leitweglenkung wieder über die besagte Vermittlungsstelle (MSC) aufzunehmen.

**15.** Vorrichtung gemäß Anspruch 1, **dadurch gekennzeichnet, dass** die besagten Verarbeitungsmittel (MT) so angeordnet sind, dass sie im Fall einer Empfangsanforderung auf den besagten ersten and zweiten Aufwärts-Datenverkehrskanälen den besagten Datenverkehrsrouter (R1) anweisen, den auf den besagten ersten and zweiten Aufwärts-Datenverkehrskanälen übertragenen Datenverkehr zu duplizieren, um ihn einerseits örtlich und direkt zu lenken und andererseits über den besagten Übertragungsnetzabschnitt an die besagte Vermittlungsstelle (MSC) zu übertragen.

**16.** Vorrichtung gemäß Anspruch 1, **dadurch gekennzeichnet, dass** die besagten Verarbeitungsmittel (MT) so angeordnet sind, dass sie nach dem Einrichten der besagten örtlichen und direkten Leitweglenkung den besagten Datenverkehrsrouter (R1) anweisen, in Richtung eines anderen Datenverkehrsrouters. (R2), der über den besagten Übertragungsnetzabschnitt mit dem Datenverkehrsrouter (R1) gekoppelt ist, binäre Indikatoren zu übertragen, die signalisieren, dass die direkte Verbindung zwischen den anrufenden (T1) und angerufenen (T2) Endgeräten besteht.

**17.** Vorrichtung gemäß Anspruch 1, **dadurch gekennzeichnet, dass** die besagten Verarbeitungsmittel (MT) so angeordnet sind, dass sie nach dem Einrichten der besagten örtlichen und direkten Leitweglenkung den besagten Datenverkehrsrouter (R1) anweisen, in Richtung eines anderen Datenverkehrsrouters (R2), der über den Übertragungsnetzabschnitt mit dem Datenverkehrsrouter (R1) gekoppelt ist, während der Dauer der Kommunikation zwischen den besagten anrufenden (T1) und angerufenen (T2) Endgeräten in komprimierter Form Steuerbits zu übertragen, die Zeitabgleich-Datenwörtern zugeordnet sind, welche Ruhezustands-Datenrahmen oder ungültigen Datenrahmen entsprechen.

**18.** Vorrichtung gemäß Anspruch 1, **dadurch gekennzeichnet, dass** die besagten Verarbeitungsmittel (MT) so angeordnet sind, dass sie nach dem Einrichten der besagten örtlichen und direkten Leitweglenkung den besagten Datenverkehrsrouter (R1) anweisen, eine Dauer einer Übertragung zu reduzieren, die von den Datenrahmen des örtlich und direkt zu lenkenden Datenverkehrs, abweicht, welche anfänglich repräsentativ für die Hin- und Rücklaufzeit zur besagten Vermittlungsstelle (MSC) und zurück war.

**19.** Vorrichtung gemäß Anspruch 18, **dadurch gekennzeichnet, dass** die besagten Verarbeitungsmittel (MT) so angeordnet sind, dass sie eine schrittweise Reduktion der Übertragungsdauer zu einem gewählten wert hin auslösen.

**20.** Datenverkehrsrouter (R1) für ein Funkkommunikationsnetz, beinhaltend mindestens einen Übertragungsnetzabschnitt und eine Vermittlungsstelle (MSC), **dadurch gekennzeichnet, dass** der besagte Datenverkehrsrouter mindestens eine Vorrichtung (D) zur Leitweglenkung gemäß einem der vorgenannten Ansprüche beinhaltet.

FIG.1

FIG.2

FIG.3

FIG.4

FIG.5

TCH

port 1
entrant

TS0

port 2
sortant

TS0

FIG.6

TCH

port 1
sortant

TS0

port 2
entrant

TS0

FIG.7

port
1

BSC

SAT
G1
G2

R1

R2

port
2

port
1

TC

port
2

FIG.8

FIG.9

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 963511 A

- FR 0314755